# EUROPÄISCHE PATENTSCHRIFT

(11) **EP 0 836 590 B1**
(45) Veröffentlichungstag und Bekanntmachung des Hinweises auf die Patenterteilung: **05.09.2001**
(21) Anmeldenummer: 96917421.8
(22) Anmeldetag: 24.05.1996
(51) Int. Cl.: C07C 219/04, C07C 233/18, C07C 233/20, C07C 305/06, C07C 305/10, C07C 309/10, C07C 309/17, C07F 9/09, B01F 17/00, C11D 1/88, C11D 3/32

(54) **AMPHIPHILE VERBINDUNGEN MIT MEHREREN HYDROPHILEN UND HYDROPHOBEN GRUPPEN AUF DER BASIS VON ALKOXYLIERTEN AMINEN UND/ODER AMIDEN UND DI-, OLIGO- ODER POLYCARBONSÄUREN**
AMPHIPHILIC COMPOUNDS WITH SEVERAL HYDROPHILIC AND HYDROPHOBIC GROUPS BASED ON ALKOXYLATED AMINES AND/OR AMIDES AND DI-, OLIGO- OR POLYCARBOXYLIC ACIDS
COMPOSES AMPHIPHILES AVEC PLUSIEURS GROUPES HYDROPHILES ET HYDROPHOBES A BASE D'AMINES ALCOXYLEES ET/OU D'AMIDES ALCOXYLES ET D'ACIDES DI-, OLIGO- OU POLYCARBOXYLIQUES

(30) Priorität: 03.07.1995 DE 19524127
(43) Veröffentlichungstag der Anmeldung: 22.04.1998
(73) Patentinhaber: SASOL Germany GmbH, 22297 Hamburg (DE)
(72) Erfinder: KWETKAT, Klaus, D-44534 Lünen (DE); KOCH, Herbert, D-46282 Dorsten (DE); RUBACK, Wulf, D-48249 Dülmen (DE)
(74) Vertreter: Schupfner, Gerhard D., Dr. Dipl.-Chem.
(86) Internationale Anmeldenummer: EP9602242
(87) Internationale Veröffentlichungsnummer: WO9702234

(56) Entgegenhaltungen:
- EP-A- 0 035 263
- WO-A-86/03741
- DE-A- 3 032 216
- DE-A- 4 217 985
- US-A- 5 160 450
- CHEMICAL ABSTRACTS, vol. 106, no. 22, 1.Juni 1987 Columbus, Ohio, US; abstract no. 178503, HIGUCHI, HISAO ET AL: "Dispersing agent for nonaqueous solids" XP002017069 & JP,A,61 227 828 (NIPPON OIL CO., LTD., JAPAN)
- CHEMICAL ABSTRACTS, vol. 83, no. 14, 6.Oktober 1975 Columbus, Ohio, US; abstract no. 116823, SUGITA, YOSHIO ET AL: "Pilling-resistant acrylic fibers" XP002017070 & JP,A,50 043 225 (TORAY INDUSTRIES, INC., JAPAN)
- DATABASE CROSSFIRE Beilsteininformationsgesellschaft GmbH XP002017071 & PHARM. BULL., Bd. 2, 1954, Seite 220, 224 MARUYAMA:

## Beschreibung

Die Erfindung betrifft amphiphile Verbindungen mit mehreren hydrophilen und hydrophoben Gruppen auf der Basis von Aminen und/oder Amiden und Di-, Oligo- oder Polycarbonsäuren.

Als amphiphile Substanzen sind eine große Vielfalt an anionischen, kationischen, nichtionischen und zwitterionischen Verbindungen bekannt. Die weitaus meisten dieser Substanzen bestehen aus einer hydrophilen Kopfgruppe und wenigstens einem hydrophoben Teil.

Bei den amphiphilen Substanzen gibt es aus ökologischen Gründen, z. B. bezüglich der Verringerung des Verpackungs- und Transportaufwandes, die Notwendigkeit, immer größere Wirkung pro Masse an eingesetzter Substanz zu erzielen. Da eine Optimierung durch Mischung von amphiphilen Substanzen nur begrenzt weiterführt, sind neue amphiphile Substanzen mit einem höheren Wirkungsgrad erforderlich. Es müssen daher insbesondere Stoffe mit niedrigeren kritischen Micellbildungskonzentrationen und/oder niedrigeren Ober- und Grenzflächenspannungen gefunden werden, um die Einsatzmengen an Wirksubstanz deutlich reduzieren zu können. Zudem müssen sie leicht, am besten aus leicht zugänglichen Ausgangssubstanzen, erhältlich sein.

Erste Lösungsansätze in Richtung auf leistungsfähigere amphiphile Substanzen durch Verdoppelung eines Teils der Struktur (hydrophile Kopfgruppe, hydrophobe Gruppe) sind bereits bekannt. So können kationische grenz-flächenaktive Verbindungen durch die Addition von langkettigen Alkylhalogeniden an permethylierte Alkylendiamine erhalten werden [R. Zana, M. Benrraou, R. Rueff, Langmuir, 7 (1991) 1072; R. Zana, Y. Talmon, Nature, 362 (1993) 228; E. Alami, G. Beinert, P. Marie, R. Zana, Langmuir, 9 (1993) 1465].

Aus der DE 42 17 985-A1 sind nichtionische Veresterungsprodukte aus oxalkylierten primären Fettaminen mit Dicarbonsäuren bekannt. Diese werden als Demulgatoren bei der Erdölaufbereitung, d.h. zur Wasserabscheidung und Reduzierung des Salzgehalts, eingesetzt. Die in der DE 42 17 985-A1 offenbarten Veresterungsprodukte weisen keine anionischen Reste auf und zeigen demzufolge andere Eigenschaften, z.B. weisen diese nicht die extrem niedrige Mizellenbildungskonzentration der gemäß dieser Erfindung beanspruchten anionischen Tenside auf.

Anionische grenzflächenaktive Verbindungen mit wenigstens zwei hydrophilen und wenigstens zwei hydrophoben Gruppen sind bisher auf der Basis von Diglycidyl-ethern hergestellt worden (US 5 160 450, JP 01 304 033, JP 4 124 165). Diglycidylether gelten jedoch als toxikologisch bedenklich und sind recht teuer. Darüber hinaus wird für ihre Herstellung Epichlorhydrin verwendet, was zu großen Mengen an Reststoffen führt, so daß diese Verbindungen unter ökotoxikologischen wie auch ökonomischen Gesichtspunkten nicht mehr zeitgemäß sind.

Es bestand daher die Aufgabe, amphiphile Verbindungen aufzufinden, die wenigstens zwei hydrophile und wenigstens zwei hydrophobe Gruppen aufweisen, wobei die amphiphilen Verbindungen einen sehr hohen Wirkungsgrad, bezogen auf die Einsatzmenge, haben, und die darüber hinaus aus technisch leicht verfügbaren Rohstoffen ohne großen Anfall von unerwünschten Nebenprodukten hergestellt werden können.

Die Aufgabe wird erfindungsgemäß durch amphiphile Di- oder Oligoester, deren Grundkörper aus Di-, Oligo- oder Polycarbonsäuren und alkoxylierten Fettaminen bzw. Fettsäureamiden hergestellt werden können, gelöst. Die entsprechenden Di- oder Oligoester sind nichtionische Tenside, die soweit sie als nicht-ionische Tenside eingesetzt werden, weiter zu anionischen amphiphilen Verbindungen umgesetzt werden, hier kommen die Sulfierung, die Carboxymethylierung oder die Umsetzung z. B. zu Isethionaten, Tauraten oder Sulfosuccinaten in Frage.

Gegenstand der Erfindung sind daher amphiphile Verbindungen der allgemeinen Formel I: 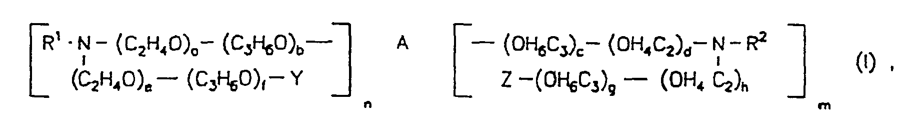 in der R¹ und R² unabhängig voneinander für einen unverzweigten oder verzweigten, gesättigten oder ungesättigten Kohlenwasserstoffrest mit 1 bis 22, vorzugsweise 6 bis 18, Kohlenstoffatomen oder einen unverzweigten oder verzweigten, gesättigten oder ungesättigten Acylrest mit 2 bis 23, vorzugsweise 7 bis 19 Kohlenstoffatomen stehen, A für einen Spacer und Y und Z für Wasserstoff oder funktionelle Gruppen stehen wobei mindestens Y oder Z verschieden von Wasserstoff ist und n und m unabhängig voneinander jeweils mindestens 1 sind.

Es seien als Substituenten R¹ und R² im einzelnen die Reste Methyl, Ethyl, n-Propyl, n-Butyl, n-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Uneicosyl, n-Docosyl und ihre verzweigtkettigen Isomeren sowie die entsprechenden einfach, zweifach oder dreifach ungesättigten Reste und die entsprechenden Acylverbindungen genannt.

A bedeutet eine geradkettige oder verzweigte, gesättigte oder ungesättigte, acyclische oder cyclische, aliphatische oder aromatische Di-, Oligo- oder Polycarbonsäure.

a, b, c, d, e, f, g und h bedeuten unabhängig voneinander Zahlen von 0 bis 15, wobei die Summe aus a und b, c und d, e und f und g und h jeweils mindestens 1 sein muß und wobei die Alkoxideinheiten statistisch oder blockweise eingebunden sind und die Reihenfolge beliebig ist. Y und Z stehen unabhängig voneinander für Wasserstoff oder einen funktionellen Rest, -CH₂COOM, -SO₃M, -C₂H₄SO₃M, -C(O)C₂H₃(SO₃M)COOM', -P(O)(OM)₂ mit M, M' = Alkali, Ammonium-, Alkanolammonium oder ½ Erdalkali, wobei mindestens Y oder Z verschieden von Wasserstoff ist.

Die erfindungsgemäßen amphiphilen Verbindungen zeichnen sich meist durch extrem niedrige kritische Micellbildungskonzentrationen (CMC) und sehr niedrige Oberflächen- und .Grenzflächenspannungen (z. B. gegen Paraffin) aus, was auf ihre besondere Struktur - wenigstens zwei hydrophile Gruppen und wenigstens zwei hydrophobe Gruppen - zurückgeführt werden muß. Darüber hinaus weisen die meisten von ihnen ein recht hohes hydrophiles Suspendiervermögen auf, das etwa auf halbem Wege zwischen dem konventioneller Tenside und dem des Pentanatriumtripolyphosphats liegt. Einige dieser Verbindungen sind extrem schnelle Netzmittel.

Die amphiphilen Verbindungen gemäß dieser Erfindung eignen sich insbesondere als Emulgatoren, Demulgatoren, Detergenzien, Dispergatoren und Hydrotropica sowie Antistatika in Industrie und Haushalt, beispielsweise auf den Gebieten Metallbearbeitung, Erzgewinnung, Kunststoffherstellung und -verarbeitung, Textilhilfsmittel, Oberflächenveredelung, Waschen und Reinigen von harten Oberflächen, insbesondere als manuelles Spülmittel, Waschen und Reinigen von Haut und Haar, Kosmetik, Medizin und Nahrungsmittelverarbeitung und -zubereitung.

Hierbei können sie mit allen gängigen anionischen, nichtionischen, kationischen und ampholytischen grenzflächenaktiven Substanzen kombiniert werden. Als Beispiele für nichtionische grenzflächenaktive Substanzen, die für eine Kombination eingesetzt werden können, seien Fettsäureglyceride, Fettsäurepolyglyceride, Fettsäureester, Ethoxylate höherer Alkohole, Polyoxyethylenfettsäureglyceride, Polyoxyethylenpropylenglykolfettsäureester, Polyoxyethylensorbitanfettsäureester, Polyoxyethylen-Rhizinusöl- oder gehärtete Rhizinusöl-Derivate, Polyoxyethylenlanolinderivate, Polyoxyethylenfettsäureamide, Polyoxyethylenalkylamine, Alkanolamine, Alkyl-aminoxide, Derivate von Eiweißhydrolysaten, Hydroxymischether, Alkylpolyglycoside und Alkylglucamide genannt.

Als Beispiele für anionische grenzflächenaktive Substanzen, die für Kombinationen eingesetzt werden können, seien Seifen, Ethercarbonsäuren und deren Salze, Alkylsulfonate, α-Olefinsulfonate, α-Sulfofettsäurederivate, Sulfonate höherer Fettsäureester, Alkoholsulfate, Alkoholethersulfate, Hydroxymischethersulfate, Salze von Phosphatestern, Tauride, Isethionate, lineare Alkylbenzolsulfonate, Alkylarylsulfonate, Sulfate der Polyoxyethylenfettsäureamide und Salze von Acylaminosäuren genannt.

Als Beispiele für kationische gängige grenzflächenaktive Substanzen, die für Kombinationen eingesetzt werden können, seien Alkyltrimethylammoniumsalze, Dialkyldimethylammoniumsalze, Alkyldimethylbenzylammoniumsalze, Alkylpyridiniumsalze, Alkylisochinoliniumsalze, Benzethoniumchloride und kationische Acylaminosäurederivate genannt.

Als Beispiele für ampholytische grenzflächenaktive Substanzen, die für Kombinationen eingesetzt werden können, seien Aminosäuren, Betaine, Sulfobetaine, Imidazolinderivate, Sojaöllipide und Lecithin genannt.

Darüber hinaus können die erfindungsgemäßen amphiphilen Verbindungen auch für sich miteinander kombiniert werden.

Den erfindungsgemäßen amphiphilen Verbindungen können ebenfalls gängige Additive zugesetzt werden. Solche Additive werden speziell für eine Formulierung ausgewählt und umfassen beispielsweise anorganische Salze, wie Natriumchlorid und -sulfat, sowie Builder, Hydrotropica, UV-Absorber, Weichmacher, Chelatbildner, Viskositätsmodifizierer und Riechstoffe.

Die obengenannten anionischen amphiphilen Verbindungen lassen sich aus Di-, Oligo- oder Polycarbonsäuren und mindestens zwei Äquivalenten alkoxylierter Fettamine und/ oder alkoxylierter Fettsäureamide herstellen, wobei man die obengenannten Produkte mit SO₃/Inertgas, Oleum, Chlorsulfonsäure, Amidosulfonsäure, Chloressigsäuresalzen, Isethionaten oder Maleinsäureanhydrid umsetzt und mit wäßrigen Alkali- oder Erdalkalihydroxiden oder wäßrigem Ammoniak oder Alkanolaminen neutralisiert. Bei Bedarf werden die Produkte in wäßriger Lösung mit Wasserstoffperoxid (0,1 bis 2,0 %, bezogen auf Feststoff) gebleicht.

## Patentansprüche

1. Amphiphile Verbindungen der allgemeinen Formel I 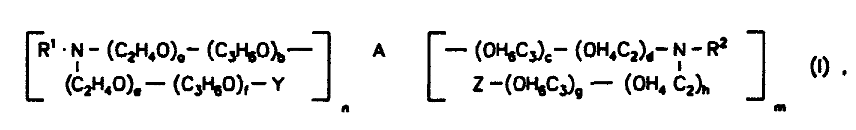 in der R¹ und R² unabhängig voneinander Kohlenwasserstoffreste mit 1 bis 22 Kohlenstoffatomen oder Acylreste mit 2 bis 23 Kohlenstoffatomen, A Reste von Di-, Oligo- oder Polycarbonsäuren, Y und Z unabhängig voneinander Wasserstoff oder die funktionellen Gruppen -CH₂COOM, -SO₃M, -C₂H₄SO₃M, -C(O)C₂H₃(SO₃M)COOM' oder -P(O)(OM)₂ mit M, M' = Alkali, Ammonium-, Alkanolammonium oder 1/2 Erdalkali, wobei mindestens Y oder Z verschieden von Wasserstoff ist, n und m unabhängig voneinander jeweils mindestens 1 ist, a, b, c, d, e, f, g und h unabhängig voneinander für Zahlen von 0 bis 15 stehen, die Summe aus a und b, c und d, e und f und g und h jeweils mindestens 1 sein muß und wobei die Alkoxideinheiten statistisch oder blockweise eingebunden sind und die Reihenfolge beliebig ist, bedeuten.

2. Amphiphile Verbindungen nach Anspruch 1,
**dadurch gekennzeichnet**,
daß A einen Spacer bedeutet, der aus einer geradkettigen oder verzweigten, gesättigten oder ungesättigten, acyclischen oder cyclischen, aliphatischen oder aromatischen Di-, Oligo- oder Polycarbonsäure besteht.

3. Amphiphile Verbindungen nach einem der vorhergehenden Ansprüche,
**dadurch gekennzeichnet**,
daß die Kohlenwasserstoffreste oder Acylreste R¹ und R² unverzweigt oder verzweigt, gesättigt oder ungesättigt sind.

4. Amphiphile Verbindungen nach einem der vorhergehenden Ansprüche,
**dadurch gekennzeichnet**,
daß R¹ und R² unabhängig voneinander einen Kohlenwasserstoffrest mit 6 bis 18 Kohlenstoffatomen oder einen Acylrest mit 7 bis 19 Kohlenstoffatomen bedeuten.

5. Verwendung der amphiphilen Verbindungen nach einem der Ansprüche 1 bis 4 als Emulgatoren oder Demulgatoren.

6. Verwendung der amphiphilen Verbindungen nach einem der Ansprüche 1 bis 4 als Hilfsmittel bei der Metallbearbeitung, Erzgewinnung oder Oberflächenveredelung oder der Kunststoffherstellung und Kunststoffverarbeitung.

7. Verwendung der amphiphilen Verbindungen nach einem der Ansprüche 1 bis 4 als Textilhilfsmittel oder für das Reinigen und Waschen von Textilien.

8. Verwendung der amphiphilen Verbindungen nach einem der Ansprüche 1 bis 4 für das Reinigen von harten Oberflächen, insbesondere als manuelles Spülmittel.

9. Verwendung der amphiphilen Verbindungen nach einem der Ansprüche 1 bis 4 für das Reinigen und Waschen von Haut und Haar.

## Claims

1. Amphiphilic compounds of the general formula I 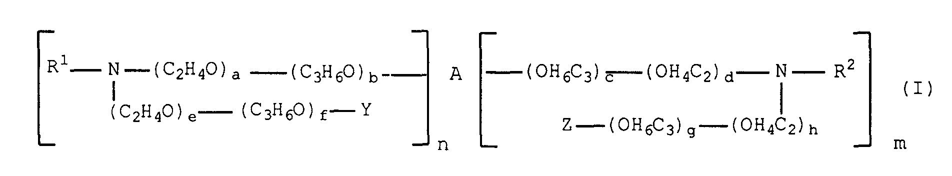 where **R**^{**1**} and **R**^{**2**}**,** independently of one another, are hydrocarbon radicals having from 1 to 22 carbon atoms, or acyl groups having from 2 to 23 carbon atoms, **A** are residues of di-, oligo-, or polycarboxylic acids, and **Y** and **Z,** independently of one another, are hydrogen or the functional groups -CH₂COOM, -SO₃M, -C₂H₄SO₃M, -C(O)C₂H₃(SO₃M)COOM', or -P(O)(OM)₂, wherein **M, M'** are equal to an alkali metal, ammonium, alkanol ammonium, or ½ alkaline earth metal ion, and where at least Y or Z is unlike hydrogen, each **n** and **m,** independently of one another, is at least 1, **a, b, c, d, e, f, g,** and **h** are independently of one another numbers from 0 to 15, wherein the total of a and b, c and d, e and f, and g and h must be at least 1 each, and where the alkoxide units are incorporated randomly or block-wise and the sequence is arbitrary.

2. The amphiphilic compounds according to claim 1,
**characterized in that**
**A** represents a spacer consisting of a straight- or branched-chain, saturated or unsaturated, acyclic or cyclic, aliphatic or aromatic di-, oligo-, or polycarboxylic acid.

3. The amphiphilic compounds according to any one of the preceding claims,
**characterized in that**
the hydrocarbon radicals or acyl groups **R**^{**1**} and **R**^{**2**} are unbranched or branched, saturated or unsaturated.

4. The amphiphilic compounds according to any one of the preceding claims,
**characterized in that**
**R**^{**1**} and **R**^{**2**}**,** independently of one another, represent a hydrocarbon group having from 6 to 18 carbon atoms or an acyl residue having from 7 to 19 carbon atoms.

5. Use of the amphiphilic compounds according to any one of claims 1 to 4 as emulsifiers or demulsifiers.

6. Use of the amphiphilic compounds according to any one of claims 1 to 4 as auxiliaries in metal working, ore mining, surface finishing, or plastics manufacture and processing.

7. Use of the amphiphilic compounds according to any one of claims 1 to 4 as textile auxiliaries or for cleaning and washing textiles.

8. Use of the amphiphilic compounds according to any one of claims 1 to 4 for cleaning hard surfaces, particularly as a manual dishwashing detergent.

9. Use of the amphiphilic compounds according to any one of claims 1 to 4 for cleaning and washing hair and skin.

## Revendications

1. Composés amphiphiles de formule générale I : 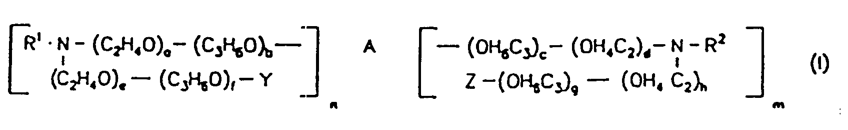 dans laquelle R¹ et R² signifient, indépendamment l'un de l'autre, des radicaux hydrocarbonés ayant 1 à 22 atomes de carbone ou des radicaux acyle ayant 2 à 23 atomes de carbone, A signifie des radicaux acides di-, oligo- ou polycarboxyliques, Y et: Z signifient, indépendamment l'un de l'autre, de l'hydrogène ou les groupes fonctionnels -CH₂COOM, -SO₃M, -C₂H₄SO₃M, -C (O) C₂H₃(SO₃M)COOM' ou -P(O)(OM)₂, où M, M' désignent un alcali, de l'ammonium, de l'alcanolammonium ou 1/2 métal alcalinoterreux, au moins Y ou Z étant différent de l'hydrogène, n et m étant indépendamment l'un de l'autre à chaque fois au moins 1, a, b, c, d, e, f, g et h signifient, indépendamment les uns des autres, les nombres 0 à 15, la somme de a et b, de c et d, de e et f, et de g et h doit être à chaque fois d'au moins 1, les unités d'alcoxydes étant reliées de manière statistique ou séquencée et la suite étant quelconque.

2. Composés amphiphiles selon la revendication 1, **caractérisés en ce que** A signifie un élément d'espacement qui est constitué d'un acide di-, oligo- ou polycarboxylique à chaîne droite ou ramifiée, saturé ou insaturé, acyclique ou cyclique, aliphatique ou aromatique.

3. Composés amphiphiles selon l'une quelconque des revendications précédentes, **caractérisés en ce que** les radicaux hydrocarbonés ou les radicaux acyle R¹ et R² sont non ramifiés ou ramifiés, saturés ou insaturés.

4. Composés amphiphiles selon l'une quelconque des revendications précédentes, **caractérisés en ce que** R¹ et R² signifient, indépendamment l'un de l'autre, un radical hydrocarboné avec 6 à 18 atomes de carbone ou un radical acyle avec 7 à 19 atomes de carbone.

5. Utilisation des composés amphiphiles selon l'une quelconque des revendications 1 à 4 comme émulsionnants ou désémulsionnants.

6. Utilisation des composés amphiphiles selon l'une quelconque des revendications 1 à 4 comme agent auxiliaire pour le traitement des métaux, l'extraction de minerais ou l'affinage de surfaces ou encore la fabrication et la transformation de matières synthétiques.

7. Utilisation des composés amphiphiles selon l'une quelconque des revendications 1 à 4 comme agent auxiliaire textile ou pour le nettoyage et le lavage de textiles.

8. Utilisation des composés amphiphiles selon l'une quelconque des revendications 1 à 4 pour le nettoyage de surfaces dures, en particulier comme agent de lavage manuel.

9. Utilisation des composés amphiphiles selon l'une quelconque des revendications 1 à 4 pour le nettoyage et le lavage de la peau et des cheveux.
